# EUROPÄISCHE PATENTANMELDUNG

(11) **EP 3 637 684 A1**
(43) Veröffentlichungstag der Anmeldung: **15.04.2020**
(21) Anmeldenummer: 18200134.7
(22) Anmeldetag: 12.10.2018
(51) Int. Cl.: H04L 12/24, G06F 9/455, H04L 29/08, H04L 29/12

(54) **VERFAHREN ZUM AUTOMATISCHEN KONFIGURIEREN EINES SYSTEMS, SYSTEM, COMPUTERPROGRAMM UND COMPUTERLESBARES MEDIUM**

(71) Anmelder: Siemens Aktiengesellschaft, 80333 München (DE)
(72) Erfinder: Albrecht, Harald, 90475 Nürnberg (DE); Höme, Stephan, 91126 Schwabach (DE); Talanis, Thomas, 91336 Heroldsbach (DE)

(57) **Zusammenfassung**

Verfahren zum automatischen Konfigurieren eines Systems, System, Computerprogramm und computerlesbares Medium

Die Erfindung betrifft ein Verfahren zum automatischen Konfigurieren eines Systems (1), bei dem
- bei Inbetriebnahme des Systems (1) und/oder im laufenden Betrieb des Systems (1) überwacht wird, welche physikalischen und/oder virtuellen Hardware-Netzwerkschnittstellen (2, 3, 4, 5) das System (1) aufweist,
- für den Fall, dass eine Hardware-Netzwerkschnittstelle (2, 3, 4, 5) bei Inbetriebnahme des Systems (1) erstmals erfasst wird, oder eine Hardware-Netzwerkschnittstelle (2, 3, 4, 5) im Betrieb des Systems (1) neu hinzukommt, dies einem Autokonfigurationsmodul (10) des Systems (1) kommuniziert wird,
- das Autokonfigurationsmodul (10) unter Verwendung einer Schablonen-Datei (12, 13, 14) eine Konfigurationsbeschreibung (18) erstellt, und
- die Konfigurationsbeschreibung umgesetzt wird, um das System (1) gemäß dieser zu konfigurieren.

Darüber hinaus betrifft die Erfindung ein System (1), insbesondere Automatisierungssystem, zur Durchführung eines solchen Verfahrens, ein Computerprogramm und ein computerlesbares Medium.

## Beschreibung

Die Erfindung betrifft ein Verfahren zum automatischen Konfigurieren eines Systems, insbesondere eines Automatisierungssystems. Darüber hinaus betrifft die Erfindung ein System, insbesondere Automatisierungssystem, zur Durchführung eines solchen Verfahrens, ein Computerprogramm und ein computerlesbares Medium.

Automatisierungssysteme insbesondere für industrielle Automatisierungsanlagen, zum Beispiel speicherprogrammierbare Steuerungen, Industrie-PCs oder dergleichen, besitzen in der Regel eine oder auch mehrere Netzwerk-Schnittstellen, bei denen es sich sowohl um physikalische Hardware-Netzwerk-Schnittstellen als auch um virtuelle Hardware-Netzwerk-Schnittstellen, zum Beispiel einer virtuellen Maschine, handeln kann. Verschiedene Systeme aus dem Bereich der Automatisierungstechnik können bereits ab Werk mit unterschiedlichen solcher Netzwerkschnittstellen ausgerüstet sein und es ist auch möglich, dass Anwender den Ausbau an physikalischen und/oder virtuellen Hardware-Netzwerk-Schnittstellen später ändern, etwa eine oder mehrere solcher Schnittstellen hinzufügen oder entfernen.

Im Betrieb sind die Schnittstellen an verschiedene Netzwerke angeschlossen. Beispielsweise kann eine solche Schnittstelle an einem Fabrik- oder Firmennetzwerk eines Betreibers angeschlossen sein, eine oder mehrere Schnittstellen an untergeordneten Maschinen- oder Zellennetzwerken, sowie eine oder mehrere Schnittstellen an (lokalen) Drahtlosnetzwerken usw.

Anwender möchten sowohl bei einer Erstinbetriebnahme als auch im laufenden Betrieb, wenn eine Änderung des Hardwareausbaus an Schnittstellen erfolgt, möglichst rasch und einfach eine durchgängige Konnektivität zwischen den verschiedenen Netzen, beispielsweise einem Firmen- bzw. Produktionsnetz, unterlagerten Zellen- oder Maschinennetzen und einem Drahtlosnetzwerk, herstellen bzw. erhalten - und zwar entsprechend des von ihnen gewählten bzw. vorgenommenen bzw. geänderten Hardwareausbaus an Schnittstellen.

Die Netzwerkkonnektivität soll sich dabei möglichst nahtlos einerseits in die Belange industrieller Produktionsstätten einfügen, zugleich aber auch mit Firmen-IT harmonieren, beispielsweise mit IPv6-Routern, die auch autokonfigurierend ausgestaltet sein können, wie beispielsweise in der EP 2 940 972 A1 und der EP 3 091 714 A1 vorgesehen, und/oder mit NAT64-Routern, die adaptiv ausgestaltet sein können, wie beispielsweise in der EP 3 062 490 A1 vorgesehen.

Im Bereich der allgemeinen IT hat sich die so genannte Container-Technologie, wie beispielsweise "Docker" oder "rkt" (gesprochen "rocket") oder "Kubernetes" bewährt (siehe https://www.docker.com bzw. EP 3 267 351 A1, https://coreos.com/rkt/, https://kubernetes.io/).

Anwendungs-Container stellen in der Regel "abgekapselte" Einheiten dar, die unabhängig voneinander ausgeführt werden können, egal wo sie sich befinden. Ähnlich wie bei virtuellen Maschinen sind Container eine Art Behälter für Anwendungen, in denen diese laufen können. Während virtuelle Maschinen jedoch eine ganze Computerumgebung abbilden, enthalten die Container üblicherweise lediglich die wichtigen Daten, die für die Ausführung der jeweilige Anwendung bzw. Anwendungen benötigt werden.

Die Container-Technologien bzw. Containerisierung ermöglichen es insbesondere, eine Software bzw. Anwendung in einem Container zu verpacken, der alles umfasst, was sie zum Laufen braucht, beispielsweise Programmcode, Laufzeit, System-Tools und/oder Systembibliotheken.

Die Container-Technologien bzw. Containerisierung erlauben es, Funktionen einfach und bequem modular zu verpacken, zu transportieren und schließlich in den operativen Bereich auszurollen. Klassische Einsatzgebiete von Containern liegen beispielsweise darin Applikationen, etwa eine Datenbank oder einen Web-Front-End, bequem zu verpacken.

Ein Container wird in der Regel von einem Container Image, im Falle von Docker beispielswiese einem Docker Image, erzeugt (instanziert), welches als Daten-Template dient.

Nach Auffassung der Anmelderin hat die Container-Virtualisierung auch im Bereich der Automatisierungstechnik ein großes Potential. Denkbar ist beispielsweise, im Bereich der Automatisierungstechnik (virtuelle) Netzwerkfunktionen insbesondere zum Erhalt von Konnektivität, etwa bei Änderungen des Hardwareausbaus, und/oder weitere Netzwerkfunktionen, containerisiert bereitzustellen bzw. zu nutzen.

Damit solche Container mit (virtuellen) Netzwerkfunktionen überhaupt einsatzbereit sind bzw. werden, müssen sie jedoch mit angeschlossenen Netzwerken bzw. Schnittstellen, die mit den Netzwerken verbunden sind, "verschaltet" bzw. "verdrahtet" werden.

Der Anmelderin ist bekannt, dass zum Verschalten von Virtuellen Maschinen (VMs) und Containern Software-Switches zum Einsatz kommen können, die auch "virtuelle" Switche genannt werden (siehe beispielsweise https://wiki.linuxfoundation.org/networking/bridge sowie https://wiki.debian.org/BridgeNetworkConnections). Solche Software-Switches sind beispielsweise Teil des Linux-Kernels und können jederzeit im laufenden Betrieb hinzugefügt, verändert und auch wieder gelöscht werden, wofür jedoch nicht unerhebliches IT- bzw. Netzwerk-Know-How erforderlich ist.

Die Docker-Technologie kennt weiterhin sogenannte "Docker Network Drivers" mit dem "Container Network Model", siehe dazu beispielsweise https://docs.docker.com/network/#networkdrivers und https://blog.docker.com/2016/12/understandingdocker-networking-drivers-use-cases/. Diese Docker Network Drivers erfordern jedoch von einem Anwender, dass er eine topologische Beschreibung der benötigten Netzwerke und deren Verschaltung bereitstellt, was ebenfalls nicht unbeachtliches IT- bzw. Netzwerk-Know-How erfordert und mit nicht unerheblichem Aufwand verbunden ist.

Auf den Docker Network Drivers aufbauend existiert weiterhin die Technologie "Docker Compose" (siehe https://docs.docker.com/compose/). Hierbei handelt es sich um ein Werkzeug, um Applikationen zu beschreiben, die insbesondere aus mehreren Docker-Containern bestehen, inklusive deren "Netzwerk-Verdrahtung". Allerdings kann Docker Compose lediglich eines oder mehrere Netzwerke referenzieren, die zuvor mittels Docker Driver angelegt und konfiguriert wurden.

Nach Auffassung der Anmelderin spielt bei der Containerisierung von (virtuellen) Netzwerkfunktionen nicht nur deren Einbindung in das externe, physikalische Netzwerk eine wichtige Rolle, sondern auch das korrekte Verdrahten der Container untereinander und mit der Netzwerk-Außenwelt.

Der Anmelderin ist bekannt, dass ein solches Verdrahten bisher in dem durch modulare Hardware geprägten Automatisierungsbereich durch das Stecken geeigneter Funktionsmodule in einer physischen Hardware-Steuerung, wie beispielsweise einer S7-1500 der Siemens AG, realisierbar wäre. Auch hier muss ein Anwender eingreifen, über entsprechendes Know-How Verfügen und es ist zusätzliche Hardware erforderlich.

Es ist daher eine Aufgabe der vorliegenden Erfindung, eine Möglichkeit dafür zu schaffen, dass eine Verdrahtung von Containern mit (virtuellen) Netzwerkfunktionen untereinander und mit externen, physikalischen Netzwerken für den Anwender automatisiert und ohne Aufwand erfolgt.

Diese Aufgabe wird gelöst durch ein Verfahren zum automatischen Konfigurieren eines Systems, insbesondere eines Automatisierungssystems, bei dem
- bei Inbetriebnahme des Systems und/oder im laufenden Betrieb des Systems überwacht wird, welche physikalischen und/oder virtuellen Hardware-Netzwerkschnittstellen das System aufweist,
- für den Fall, dass eine physikalische oder virtuelle Hardware-Netzwerkschnittstelle bei Inbetriebnahme des Systems erstmals erfasst wird, oder eine physikalische oder virtuelle Hardware-Netzwerkschnittstelle im Betrieb des Systems neu hinzukommt oder wegfällt, dies einem Autokonfigurationsmodul des Systems zusammen mit einer Information über die Art der betroffenen Hardware-Netzwerkschnittstelle und/oder die Art eines mit dieser verbundenen oder zu verbindenden Netzwerkes kommuniziert wird,
- das Autokonfigurationsmodul unter Verwendung einer bevorzugt auf dem System gespeicherten, der Art der betroffenen Hardware-Netzwerkschnittstelle und/oder der Art eines mit dieser verbundenen oder zu verbindenden Netzwerkes zugeordneten Schablonen-Datei eine Konfigurationsbeschreibung erstellt, die
   eine erste Teilkonfigurationsbeschreibung für wenigstens einen Kommunikations-Container, der wenigstens eine Anwendung umfasst, mittels derer Netzwerk-Funktionen bereitgestellt werden können,
   und
   eine zweite Teilkonfigurationsbeschreibung für Netzwerk-Funktionen zur Verbindung des wenigstens einen Kommunikations-Containers mit der betroffenen Hardware-Netzwerkschnittstelle, insbesondere in Form einer Konfigurationsbeschreibung für wenigstens eine virtuelle Bridge und/oder wenigstens einen virtuellen Switch, umfasst, und
- die Konfigurationsbeschreibung ausgeführt wird, um das System gemäß dieser zu konfigurieren.

Darüber hinaus wird die Aufgabe durch ein System zur Durchführung des erfindungsgemäßen Verfahrens gelöst. Ein solches System ist bevorzugt derart ausgebildet und/oder eingerichtet,
- dass einem Autokonfigurationsmodul des Systems gemeldet wird, wenn eine physikalische oder virtuelle Hardware-Netzwerkschnittstelle bei Inbetriebnahme des Systems erstmals erfasst wird, und/oder eine physikalische oder virtuelle Hardware-Netzwerkschnittstelle im Betrieb des Systems neu hinzukommt oder wegfällt, wobei zusammen mit einer solchen Meldung eine Information über die Art der betroffenen Hardware-Netzwerkschnittstelle und/oder die Art eines mit dieser verbundenen oder zu verbindenden Netzwerkes kommuniziert wird,
- dass das Autokonfigurationsmodul jedes Mal, wenn eine solche Meldung eingeht, unter Verwendung einer auf dem System gespeicherten, der Art der jeweils betroffenen Hardware-Netzwerkschnittstelle und/oder der Art eines mit dieser verbundenen oder zu verbindenden Netzwerkes zugeordneten Schablonen-Datei eine Konfigurationsbeschreibung erstellt, die
   eine erste Teilkonfigurationsbeschreibung für wenigstens einen Kommunikations-Container, der wenigstens eine Anwendung umfasst, mittels derer Netzwerk-Funktionen für die jeweils betroffene Schnittstelle bereitgestellt werden können, und eine zweite Teilkonfigurationsbeschreibung für Netzwerk-Funktionen zur Verbindung des wenigstens einen Kommunikations-Containers mit der jeweils betroffenen Schnittstelle, insbesondere in Form einer Konfigurationsbeschreibung für wenigstens eine virtuelle Bridge und/oder wenigstens einen virtuellen Switch, umfasst, und
- dass die Konfigurationsbeschreibung ausgeführt wird, um das System gemäß dieser zu konfigurieren.

Die vorliegende Erfindung schließt mit anderen Worten die "Lücke" zwischen industriellen Anwendern und der Container-Technologie, wie beispielsweise Docker. So wird es möglich, die großen Vorteile dieser Technologie für Netzwerkfunktionen nutzbar zu machen, ohne dass es seitens der Anwender eines speziellen IT- bzw. Netzwerks- bzw. Container-Know-Hows bedarf. Dabei besteht der Kerngedanke darin, unter Verwendung eines Autokonfigurationsmoduls Container mit Netzwerkfunktionen, die vorliegend auch als Netzwerkfunktions-Container bzw. Kommunikations-Container bezeichnet werden, dynamisch und automatisch mit ihrer physikalischen Netz-Außenwelt zu verbinden, wofür eine oder auch mehrere Schablonen-Dateien genutzt werden.

Das erfindungsgemäß zum Einsatz kommende Autokonfigurationsmodul ermittelt und überwacht den Hardware-Systemausbau um damit die Systemkonfiguration in Bezug auf die verfügbaren Hardware-Netzwerkschnittstellen. Hardware-Netzwerkschnittstellen können dabei sowohl in Form von physikalischen Hardware-Netzwerkschnittstellen als auch in Form von virtuellen Hardware-Netzwerkschnittstellen vorliegen. Bei einer Hardware-Netzwerkschnittstelle im Sinne der vorliegenden Anwendung handelt es sich insbesondere um eine solche, für die wenigstens ein Treiber, insbesondere wenigstens ein Betriebssystem-Treiber vorgesehen ist.

Selbstverständlich kann es sein, dass über die Betriebsdauer eines Systems mehrmals eine Hardware-Netzwerkschnittstelle ergänzt und/oder entfernt und/oder bei Inbetriebnahme eines Systems mehrere Hardware-Netzwerkschnittstellen erstmalig erfasst werden. Dann wird bevorzugt jedes Mal, wenn eine Netzwerkschnittstelle bei Inbetriebnahme des Systems erstmals erfasst wird, und/oder jedes Mal, wenn eine physikalische oder virtuelle Hardware-Netzwerkschnittstelle im Betrieb des Systems neu hinzukommt oder wegfällt, dies dem Autokonfigurationsmodul des Systems zusammen mit einer Information über die Art der jeweils betroffenen Hardware-Netzwerkschnittstelle und/oder die Art eines mit dieser verbundenen oder zu verbindenden Netzwerkes kommuniziert, und jedes Mal unter Verwendung einer bevorzugt auf dem System gespeicherten, der Art der jeweils betroffenen Hardware-Netzwerkschnittstelle und/oder der Art eines mit dieser verbundenen oder zu verbindenden Netzwerkes zugeordneten Schablonen-Datei eine Konfigurationsbeschreibung erstellt und umgesetzt bzw. ausgeführt.

Das erfindungsgemäße System ist hierzu bevorzugt ausgebildet und/oder eingerichtet.

Neben der Information darüber, dass eine Änderung hinsichtlich der Schnittstellen stattgefunden hat bzw. eine Schnittstelle bei Inbetriebnahme erstmalig erfasst wird, erhält das Autokonfigurationsmodul auch Informationen über die Art der Schnittstelle. Insbesondere wird kommuniziert, welche Rolle der Schnittstelle zukommt.

Das Autokonfigurationsmodul zieht dann eine zu der Art der Schnittstelle gehörige Schablonen-Datei heran und erstellt unter Verwendung dieser eine zu der Art der betroffenen Schnittstelle gehörige Konfigurationsbeschreibung. So kann eine dynamische, Kontext-abhängige Konfiguration des Systems erfolgen.

Dabei umfasst die Konfigurationsbeschreibung wenigstens zwei Teilkonfigurationsbeschreibungen.

Konkret eine erste, welche den oder die gewünschten bzw. erforderlichen Kommunikations-Container betrifft. Diese erste Teilkonfigurationsbeschreibung wird zwecks weiterer Verarbeitung in einem Container-System, wie beispielsweise Docker Compose, erstellt. Diese ist insbesondere ausgestaltet bzw. geeignet, um mittels eines solchen Werkzeuges aus dieser bzw. auf Basis dieser wenigstens einen Kommunikations-Container zu erzeugen. Die erste Teilkonfiguration kann insbesondere wenigstens eine Referenz bzw. wenigstens einen Verweis auf wenigstens einen Container bzw. ein Container-Image umfassen. Es kann auch nur ein Image-Name wenigstens eines Kommunikations-Containers in der ersten Teilkonfigurationsbeschreibung enthalten sein. Die jeweilige Betriebssystemkonfiguration kann dann den oder die Image-Namen noch mit dem Ort (etwa der URL) einer oder mehrerer sogenannter Image-Registries vervollständigen, sobald das Container-Image auf das System geladen werden muss, damit einer oder mehrere Container aus dem Image erzeigt werden bzw. werden können. Eine Referenz kann zum Beispiel in Form einer Pfad- bzw. URL-Angabe vorliegen.

Die zweite Teilkonfigurationsbeschreibung beschreibt die erforderlichen virtuellen Netzwerkfunktionen, wie beispielsweise virtuelle, insbesondere Software-(Ethernet-)Bridges, die für das Verbinden des oder der Kommunikations-Container mit der jeweils betroffenen Schnittstelle erforderlich sind. Die zweite Teilkonfigurationsbeschreibung betrifft insbesondere virtuelle Netzwerkinfrastruktur eines Betriebssystems des Systems bzw. dient der Einrichtung solcher. Alternativ oder zusätzlich zu virtuellen, insbesondere Software-(Ethernet-)Bridges kann es sich auch um virtuelle "Kabel" bzw. virtuelle Ethernet-Systeme handeln, insbesondere sogenannte VETHs, und/oder um MAC VLANs, die bevorzugt virtuelle Kabel bis an eine physikalische Hardware-Netzwerkschnittstelle darstellen können.

Es kann auch eine Verdrahtung von Kommunikations-Containern untereinander erforderlich bzw. vorgesehen und entsprechend in der Teilkonfigurationsbeschreibung berücksichtigt sein. Eine solche kann ebenfalls über die vorgenannten Mittel, beispielsweise Soft-Bridges und/oder virtuelle Kabel oder dergleichen erhalten werden.

Anhand der zweiten Teilkonfigurationsbeschreibung sorgt das Autokonfigurationsmodul insbesondere dafür, dass wenigstens ein (virtuelles) internes Netzwerk, beispielsweise wenigstens ein ein internes Netzwerk bildender Software-Switch bzw. wenigstens eine Software-Bridge, anstatt mit dem Host-IP-Stack, wie es insbesondere bei Docker üblich ist, allein mit der betroffenen Schnittstelle verknüpft wird. Auch ist es möglich, anstatt einer (expliziten) Software-Bridge bzw. einem (expliziten) Software-Switch den oder die Kommunikations-Container direkt mit einer ("Master" bzw. externen) IP-Schnittstelle zu verbinden. Dann übernimmt bzw. "spielt" die IP-Schnittstelle versteckt die Bridge-Funktion.

Über die Konfigurationsdatei kann bzw. soll insbesondere IP-Konnektivität für die betroffenen Schnittstelle hergestellt werden.

In besonders bevorzugter Ausgestaltung wird die Konfigurationsbeschreibung erhalten, indem einer oder mehrere in der Schablonen-Datei vorgesehene Platzhalter durch wenigstens einen zu der (jeweils) betroffenen Hardware-Netzwerkschnittstelle gehörigen Parameter, insbesondere einen Namen dieser, ersetzt werden. Bevorzugt ist das Autokonfigurationsmodul entsprechend ausgebildet und/oder eingerichtet. Das Ersetzen von einem oder mehreren Platzhaltern in der Schablonen-Datei durch einen Schnittstellen-Parameter, insbesondere Schnittstellen-Namen stellt bevorzugt die einzige Handlung dar, die durchgeführt wird, um aus der zu der betroffenen Schnittstelle gehörigen Schablonen-Datei eine Konfigurationsbeschreibung zu erhalten. Das heißt, die Schablonen-Datei stellt bevorzugt bereits die erforderliche Konfigurationsbeschreibung dar, die jedoch noch um den Kontext, insbesondere die Information der konkret betroffenen Schnittstelle zu ergänzen ist, also um die Information, welche physische oder virtuelle Schnittstelle erstmals erfasst bzw. ergänzt wurde.

Das Ersetzen von Platzhaltern lässt sich sehr einfach durchführen und ermöglicht es, eine (gemeinsame) Schablone für beliebig viele Netzwerkschnittstellen zu verwenden, so lange sie sich durch die gleiche Art auszeichnen bzw. solange diesen die gleiche Rolle zukommt.

Die Information darüber, um welche Art von Schnittstelle es sich bei der (jeweils) betroffenen Schnittstelle handelt, bzw. welche Rolle dieser zukommt, kann dem Autokonfigurationsmodul bevorzugt kommuniziert werden, indem diesem wenigstens ein zu der (jeweils) betroffenen Schnittstelle gehöriger Parameter übermittelt wird, besonders bevorzugt ein zw. der zu der (jeweils) betroffenen Schnittstelle gehöriger Name. Dann werden bevorzugt bestimmte Namensregeln für die Bezeichnung er Schnittstellen verwendet. Zum Beispiel werden etwa allen Schnittstellen der gleichen Art bzw. mit der gleichen Rolle, beispielsweise allen Upstream-Schnittstellen, also Schnittstellen, die mit einem Upstream-Netzwerk verbunden oder zu verbinden sind, Namen gegeben, die mit den gleichen Anfangszeichen, etwa Anfangsbuchstaben beginnen, etwa alle mit "ens*", wobei "*" bedeutet, dass weitere Zeichen folgen, über welche die Schnittstelle von anderen Schnittstellen unterscheidbar ist.

Aus der Schablonen-Datei werden von dem Autokonfigurationsmodul insbesondere für die jeweils betroffene Schnittstelle, also kontextabhängig, die Netzwerke zwischen der jeweils betroffenen Schnittstelle und dem oder den Kommunikations-Containern in einem (einzelnen) Kontext erzeugt bzw., für den Fall, dass eine Schnittstelle wegfällt, wieder entfernt.

Das Autokonfigurationsmodul kann als Software implementiert sein. Die Software kann dann z.B. auf allgemeiner, ohnehin für andere Zwecke vorhandener Hardware des Systems laufen, so dass für die Umsetzung der vorliegenden Erfindung kein zusätzlicher beziehungsweise spezieller Hardware-Ausbau erforderlich ist. Selbstverständlich ist es aber auch möglich, dass für das Autokonfigurationsmodul - ggf. zusätzlich zu Software dieses - spezielle, zusätzliche Hardware vorgesehen ist. Das Autokonfigurationsmodul kann auch rein Hardware-implementiert sein.

Bei dem System kann es sich beispielsweise um einen Industrie-PC oder eine insbesondere speicherprogrammierbare Steuerung handeln. Das System kann Teil einer industriellen Automatisierungsanlage sein. Prinzipiell kann die erfindungsgemäße Autokonfiguration für jede Art von System aus dem industriellen Bereich, insbesondere der industriellen Automatisierung vorgesehen sein, welches in seiner Grundausstattung, bei Inbetriebnahme, eine oder mehrere (physikalische und/oder virtuelle) Hardware-Netzwerkschnittstellen aufweist und/oder dem im Betrieb eine oder mehrere Hardware-Netzwerkschnittstellen hinzugefügt und/oder von diesem entfernt werden.

Die erfindungsgemäße Vorgehensweise bietet mehrere große Vorteile. Einerseits müssen industrielle Anwender kein IT-Fachwissen für das Anwenden von containerisierten Netzwerkfunktionen, beispielsweise weder über Container, etwa Dock-Container, noch über zugehörige Werkzeuge, etwa Docker Network Driver, noch über Software-Switches haben, und können dennoch die Vorteile dieser Technologie für eine automatische Konfiguration im Falle einer Änderung bzw. Ergänzung des Hardware-Schnittstellenausbaus ihrer Systeme bzw. für deren Inbetriebnahme nutzen. Es wird daher besonders einfach für Anwender, Systeme aus dem Bereich der Automatisierungstechnik um Netzwerkzu- oder Abgänge zu erweitern bzw. solche zu entfernen. Eine manuelle Konfiguration mittels zusätzlichem Engineering- bzw. Konfigurations-Werkzeug(en) ist nicht mehr nötig. Es genügt das Anstecken der entsprechenden Netzwerk-Schnittellen-Hardware, an welches sich dann eine vollständig automatische Konfiguration anschließt.

In besonders bevorzugter Ausgestaltung ist vorgesehen, dass die Schablonen-Datei aus einer Mehrzahl von insbesondere auf dem System gespeicherten unterschiedlichen Schablonen-Dateien ausgewählt wird. Unter einer Mehrzahl sind dabei zwei, drei, vier oder auch mehr Schablonen-Dateien zu verstehen. Die Auswahl aus einer Mehrzahl von Schablonen-Dateien erfolgt bevorzugt automatisiert anhand von in den Schablonen-Dateien enthaltenen Filterregeln. Das erfindungsgemäße System, insbesondere das Autokonfigurationsmodul dieses ist bevorzugt entsprechend ausgebildet und/eingerichtet.

Sind mehrere Schablonen-Dateien verfügbar, aus denen ausgewählt werden kann, kann besonders einfach auf eine erstmalige Erfassung und/oder das neue Hinzufügen von Schnittstellen unterschiedlicher Art reagiert werden.

Wird auf Filterregeln zurückgegriffen, können diese beispielsweise einen der jeweils betroffenen Schnittstelle zugeordneten Namen betreffen. Schnittstellen ist bzw. wird in der Regel ein eindeutiger Name zugeordnet, insbesondere von dem bzw. über das Betriebssystem, und über den Namen ist es auf einfache Weise möglich, zwischen verschiedenen Arten von Schnittstellen zu unterscheiden. Beispielsweise kann vorgesehen sein, dass jeweils die ersten Zeichen, zum Beispiel Buchstaben, von Netzwerkschnittstellen der gleichen Art bzw. mit gleicher Rolle übereinstimmen und die konkrete Individualisierung über nachfolgende Zeichen, etwa Buchstaben, erfolgt.

Weiterhin bevorzugt ist vorgesehen, dass für jede Art von physikalischer und/oder virtueller Hardware-Netzwerkschnittstelle, welche das System aufweisen kann, jeweils wenigstens eine, bevorzugt jeweils genau eine Schablonen-Datei insbesondere auf dem System gespeichert ist, und/oder dass für zumindest drei verschiedene Arten von physikalischen und/oder virtuellen Hardware-Netzwerkschnittstellen jeweils wenigstens eine, bevorzugt jeweils genau eine Schablonen-Datei insbesondere auf dem System gespeichert ist, wobei es sich bei den drei verschiedenen Arten von physikalischen und/oder virtuellen Hardware-Netzwerkschnittstellen besonders bevorzugt um Upstream-Schnittstellen, die insbesondere mit einem Upstream-, etwa Firmen-Netzwerk eines Anwenders zu verbinden oder verbunden sind, und Downstream- Schnittstellen, die mit einem unterlagerten Netzwerk, insbesondere Zellen- oder Produktionsnetz, zu verbinden oder verbunden sind, und WLAN-Schnittstellen, die mit einem Drahtlos-Netzwerk zu verbinden oder verbunden sind, handelt.

Im industriellen Umfeld sind oftmals folgende drei Arten von Schnittstellen möglich:
- Upstream/Infrastruktur Netzwerkschnittstellen
   Bei diesen handelt es sich insbesondere um kabelgebundene Schnittstellen (sogenannte "wired-interfaces"), die in der Regel unterlagerte Netzsegmente, etwa Feldbus-Netzsegmente, beispielsweise an eine IT-Infrastruktur, etwa ein Firmennetzwerk, anbinden.
- Wireless Netzwerkschnittstellen:
   Diese Schnittstellen stellen in der Regel automatisiert lokale WLAN-Zugänge insbesondere ausschließlich zu den unterlagerten Feldbus-Netzsegmenten bereit. Damit wird es beispielsweise möglich, mobile Android- und/oder iOS-Geräte auch in drahtgebundenen Automatisierungsnetzen verwenden zu können.
- Downstream Netzwerkschnittstellen:
   Diese Schnittstellen führen in der Regel in unterlagerte Feldbus-Netzsegmente, die beispielsweise der Kommunikation zwischen Feldgeräten und einer Steuerung bzw. einem Industrie-PC einer Automatisierungsanlage dienen, an denen entsprechend einzelne Maschinen, Aggregate und Automatisierungsgeräte, insbesondere einer industriellen Automatisierungsanlage, angeschlossen sind. In diese "downstream" Netzsegmente werden bevorzugter Weise Netzwerkfunktionen von Nat64-Routern und/oder IPV6-Routern und insbesondere Inbetriebsetzungs-Werkzeuge wie das sogenannte Primary Setup Tool (PST), etwa für IP-basierte Feldgeräte, automatisch bereitgestellt, sobald eine Netzwerkschnittstelle dieser Art erkannt wird und in Betrieb geht.

Sind für diese drei Arten von Schnittstellen bzw. diese drei Rollen von Schnittstellen Schablonen-Dateien zum Erhalt einer zugehörigen Konfigurationsbeschreibung verfügbar, können die meisten Fälle von Schnittstellen-Änderungen bzw. -Erfassungen im industriellen Bereich abgedeckt werden.

Eine weitere bevorzugte Ausführungsform zeichnet sich dadurch aus, dass dem Autokonfigurationsmodul das erstmalige Erfassen einer physikalischen oder virtuellen Hardware-Netzwerkschnittstelle bei Inbetriebnahme des Systems und/oder das neue Hinzukommen und/oder Wegfallen einer physikalischen oder virtuellen Hardware-Netzwerkschnittstelle im Betrieb des Systems kommuniziert wird, indem ein auf dem System laufendes Betriebssystem dem Autokonfigurationsmodul ein entsprechendes Ereignis meldet, insbesondere als Plug-and-Play-Ereignis. Auf diese Weise kann das Autokonfigurationsmodul auf einfachem Wege über den Hardware-Schnittstellen-Ausbau bzw. Änderungen dieses informiert werden. Das erfindungsgemäße System ist in Weiterbildung entsprechend ausgebildet und/oder eingerichtet.

Was die Umsetzung der Kommunikationsbeschreibung und den Erhalt einer entsprechenden Konfiguration des Systems angeht, kann vorgesehen sein, dass im Rahmen der Umsetzung der ersten Teilkonfigurationsbeschreibung der wenigstens eine Kommunikations-Container erzeugt wird. Das erfindungsgemäße System ist bevorzugt entsprechend ausgebildet und/oder eingerichtet. Die Umsetzung kann mittels eines Container-Controller-Moduls des Systems erfolgen.

Das Container-Controller-Modul ist besonders bevorzugt als Software implementiert, kann aber, genau wie das Autokonfigurationsmodul prinzipiell auch spezielle, zusätzliche Hardware umfassen bzw. auch rein hardware-implementiert sein.

Die Ausgestaltung eines Container-Controller-Moduls wird in der Regel davon abhängen, welche Container-Technologie bzw. welche Container-Technologien zum Einsatz kommen. Das Container-Controller-Modul kann beispielsweise ein Docker Composer Werkzeug und/oder einen Kubernetes Pod Scheduler Controller umfassen oder dadurch gegeben sein. Zu Kubernetes siehe beispielsweise https://kubernetes.io/docs/reference/commandline-tools-reference/kube-scheduler/. Wird alternativ oder zusätzlich zu Docker und/oder Kubernetes auf andere bzw. weitere Container-Technologie(n) zurückgegriffen, kann das Container-Controller-Modul zweckmäßigerweise zu dieser bzw. diesen Technologien gehörige Werkzeuge, mittels derer Container aus einer zugehörigen Konfigurationsbeschreibung erzeugt werden können, umfassen bzw. dadurch gegeben sein.

Eine weitere vorteilhafte Ausführungsform des erfindungsgemäßen Verfahrens zeichnet sich dadurch aus, dass die zweite Teilkonfigurationsbeschreibung von einem Netzwerk-Controller-Modul des Systems umgesetzt wird. Das erfindungsgemäße System ist bevorzugt entsprechend ausgebildet und/oder eingerichtet. Die zweite Teilkonfigurationsbeschreibung kann beispielsweise in Form eines Shell-Skriptes vorliegen, und/oder als sogenannte "systemd units", und/oder als Clustersystem-Objekte (insbesondere Kubernetes API-objects) und/oder dergleichen mehr ausgeführt sein. Zu "systemd units" siehe beispielsweise https://en.wikipedia.org/wiki/Systemd und zu Kubernetes https://en.wikipedia.org/wiki/Kubernetes. Das Netzwerk-Controller-Modul, welches bevorzugt als Software implementiert ist, kann dann entsprechend einen Shell-Skript-Interpreter und/oder systemd und/oder einen Kubernetes-Controller umfassen oder dadurch gebildet werden.

Besonders bevorzugt ist weiterhin vorgesehen, dass wenigstens eine Anwendung des wenigstens einen Kommunikations-Containers gemäß der ersten Teilkonfigurationsbeschreibung Funktionen eines insbesondere automatisch konfigurierenden IPv6- und/oder NAT64-Routers und/oder eines Namensdienst-, insbesondere DNS-Servers und/oder eines Brouters bereitstellt und/oder durch eine Software für einen WLAN-Access-Point gegeben ist oder eine solche umfasst.

Bei Netzwerkfunktionen des wenigstens einen Kommunikations-Containers, also Netzwerkfunktionen gemäß der ersten Teilkonfigurationsbeschreibung, handelt es sich insbesondere um solche, die Konnektivität der betroffenen Hardware-Netzwerkschnittstelle mit wenigstens einer weiteren Hardware-Netzwerkschnittstelle bzw. einem externen Netzwerk gewährleisten bzw. herstellen, ggf. mit Netztrennung.

Bei Netzwerkfunktionen des wenigstens einen Kommunikations-Containers kann es sich beispielsweise um folgende handeln:
- autokonfigurierende IPv6-Router bevorzugt samt autokonfigurierendem und/oder "autoiterativem" DNS-Server, wie in den ebenfalls auf die Anmelderin zurückgehenden europäischen Patenanmeldungen des Aktenzeichens Nr. 18187459.5 und 18187456.1 sowie 17194062.0 beschrieben.
- autokonfigurierende NAT64-Router insbesondere inklusive Profinet-Systeme-Scanner wie in den ebenfalls auf die Anmelderin zurückgehenden EP 3 062 490 B1 beschrieben.

Welche Netzwerkfunktionen konkret über den einen oder die mehreren Kommunikations-Container bereitgestellt werden bzw. bereitzustellen sind, wird dabei von der Art der betroffenen Schnittstelle abhängen. Wie vorstehende bereits angemerkt, sind für Downstream-Netzwerkschnittstellen in der Regel insbesondere IPv6- und/oder NAT64-Funktionen gewünscht bzw. erforderlich. Wird eine Wireless-Network-Schnittstelle hinzugefügt, kann erforderliche bzw. zugehörige Software containerisiert bereitgestellt werden.

Zusätzlich zu insbesondere IP-Konnektivität bereitstellenden bzw. gewährleistenden Netzwerkfunktionen können weitere Funktionen bzw. Dienste über einen oder mehrere Container bereitgestellt werden, etwa Inbetriebsetzungs-Werkzeuge, wie das sogenannte Primary Setup Tool (PST). Über solche können z.B. (IP-basierte) Teilnehmer eines an die betroffene Netzwerkschnittstelle angeschlossenen (Teil-)Netzwerkes, beispielsweise an ein Feldbussegment angeschlossene (IP-basierte) Feldgeräte, automatisch Inbetrieb gesetzt werden. Die erste Teilkonfigurationsbeschreibung kann entsprechend auch Angaben zu wenigstens einem Container enthalten, der wenigstens eine Anwendung umfasst, mittels derer neben Netzwerkfunktionen andere bzw. weitere Funktionen bzw. Dienste bereitgestellt werden können, insbesondere Inbetriebsetzungsfunktionen bzw. - dienste.

Besonders bevorzugt kann weiterhin vorgesehen sein, dass für den Fall, dass eine physikalische oder virtuelle Hardware-Netzwerkschnittstelle im Betrieb des Systems wegfällt, weil sie beispielsweise von einem Anwender entfernt und/oder deaktiviert wird, zugehörige Netzwerk-Funktionen deaktiviert und/oder entfernt und/oder Kommunikations-Container gestoppt werden. Dies wird bevorzugt von dem Autokonfigurationsmodul veranlasst. Zugehörige Netzwerkfunktionen sind insbesondere solche, die für die betroffene Hardware-Netzwerkschnittstelle eingerichtet waren und über die besonders bevorzugt Konnektivität der betroffenen Hardware-Netzwerkschnittstelle mit wenigstens einer weiteren Hardware-Netzwerkschnittstelle bzw. einem externen Netzwerk gewährleistet wurde, ggf. mit Netztrennung. Das erfindungsgemäße System ist bevorzugt entsprechend ausgebildet und/oder eingerichtet.

Bei den Netzwerkfunktionen und/oder Kommunikations-Containern, die deaktiviert und/oder entfernt bzw. gestoppt werden, handelt es sich besonders bevorzugt um die diejenigen Netzwerkfunktionen bzw. Kommunikations-Container, die im Falle der erstmaligen Erfassung einer Hardware-Netzwerkschnittstelle und/oder der Ergänzung einer solchen erfindungsgemäß unter Nutzung einer Schablonen-Datei hinzukommen.

Hierfür kann die zu verwendende Schablonen-Datei, die von der Art der weggefallenen Netzwerk-Schnittstelle abhängt, beispielsweise Lösch- und/oder Stoppanweisungen enthalten, insbesondere Löschanweisungen bzgl. Netzwerkfunktonen zur Verbindung wenigstens eines Kommunikations-Containers mit der betroffenen, weggefallenen Hardware-Netzwerkschnittstelle, beispielsweise in Form wenigstens einer virtuellen Bridge, und/oder wenigstens eines virtuellen Switches für diese Verbindung. Das erfindungsgemäße System ist bevorzugt entsprechend ausgebildet und/oder eingerichtet.

Bei der Schablonen-Datei, die im Falle des Wegfallens einer Hardware-Netzwerkschnittstelle verwendet wird handelt es sich besonders bevorzugt um die gleiche Schablonen-Datei, die im Falle einer erstmaligen Erfassung und/oder der Ergänzung einer Hardware-Schnittstelle gleicher Art bzw. mit gleicher Rolle zur Verwendung kommt. Dann sind bevorzugt zusätzlich Lösch- und/oder Stoppanweisungen in dieser enthalten. Es sei angemerkt, dass insbesondere Kommunikations-Container betreffende Stoppanweisungen, die etwa von einem Container-Werkzeug zu interpretieren sind, auch separat von der Schablonen-Datei übermittelt werden können, etwa auf direktem oder indirektem Wege von dem Autokonfigurationsmodul an ein Container-Controller-Modul.

Wird für die erstmalige Erfassung bzw. für das Hinzukommen von Schnittstellen die gleiche Schablonen-Datei verwendet, wie im Falle des Wegfallens von Schnittstellen der gleichen Art, ist bevorzugt für jede Schnittstellen-Art bzw. Schnittstellen-Rolle genau eine Schablonen-Datei vorgesehen, insbesondere auf dem System gespeichert, was eine besonders "schlanke" Lösung für eine Autokonfiguration und ein automatisches Löschen darstellt.

Ein weiterer Gegenstand der vorliegenden Erfindung ist ein Computerprogramm umfassend Programmcode-Mittel zur Durchführung des Verfahrens.

Darüber hinaus betrifft die Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen. Ein Rechner kann Teil eines erfindungsgemäßen Systems sein.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

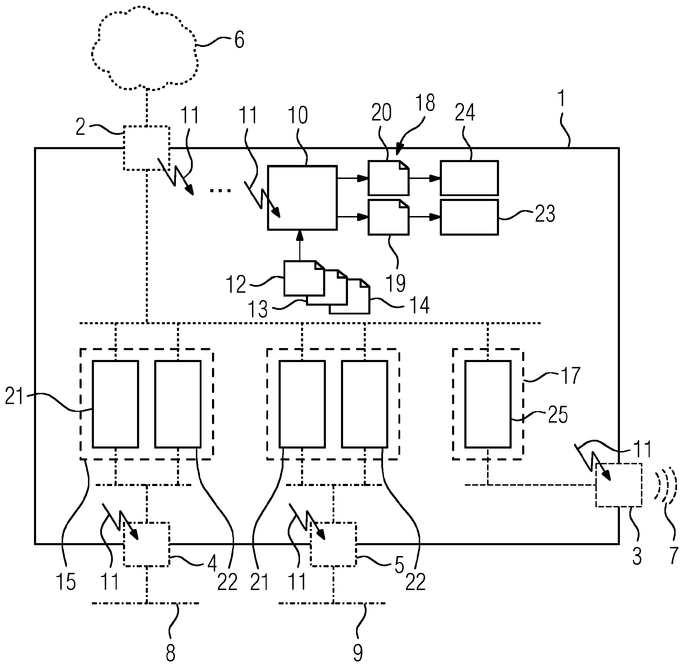

Weitere Merkmale und Vorteile der vorliegenden Erfindung werden anhand der nachfolgenden Beschreibung einer Ausführungsform des Verfahrens sowie des Systems der vorliegenden Erfindung unter Bezugnahme auf die beiliegende Zeichnung deutlich. Die einzige Figur zeigt eine rein schematische Darstellung eines erfindungsgemäßen Systems.

Dargestellt ist ein Ausführungsbeispiel eines erfindungsgemäßen Automatisierungssystems 1 einer in den Figuren nicht weiter dargestellten industriellen Automatisierungsanlage in rein schematischer Darstellung.

Bei dem Automatisierungssystem 1 handelt es sich vorliegend um eine speicherprogrammierbare Steuerung (SPS). Es sei betont, dass es sich alternativ dazu auch um eine andere Art von System handeln kann. Die erfindungsgemäße Autokonfiguration kann prinzipiell für jede Art von System aus dem industriellen Bereich, insbesondere der industriellen Automatisierung vorgesehen sein, welches in seiner Grundausstattung, bei Inbetriebnahme, eine oder mehrere Hardware-Netzwerkschnittstellen aufweist und/oder dem im Betrieb eine oder mehrere Hardware-Netzwerkschnittstellen hinzugefügt und/oder von diesem entfernt werden (können).

Das System 1 weist vorliegend vier Hardware-Netzwerkschnittstellen 2, 3, 4, 5 auf. Alle vier Schnittstellen sind bei dem hier dargestellten Ausführungsbeispiel physikalische Hardware-Netzwerkschnittstellen 2, 3, 4, 5. Alternativ dazu kann es sich bei einer, bei mehreren oder auch allen diesen Schnittstellen um virtuelle Hardware-Netzwerkschnittstellen, beispielsweise einer oder mehrerer virtuellen Maschinen (VMs) handeln.

Für jede der vier Schnittstellen 2, 3, 4, 5 umfasst ein Betriebssystem des Automatisierungssystems 1, welches in der Figur nicht dargestellt ist, jeweils wenigstens einen Treiber.

Die Schnittstellen 2, 3, 4, 5 sind an verschiedene Netzwerke 6, 7, 8, 9 angeschlossen.

Konkret ist die Schnittstelle 2, bei welcher es sich um eine Upstream/Infrastruktur Netzwerkschnittstelle handelt, an ein Firmen- oder Fabriknetzwerk 6 angeschlossen, welches in der Figur rein schematisch durch eine Wolke angedeutet ist. Die Schnittstelle 3 ist an ein (lokales) Drahtlos-Netzwerk 7 angeschlossen und stellt somit eine Drahtlos-Netzwerk-Schnittstelle dar, und die beiden Schnittstellen 4, 5 sind jeweils an ein unterlagertes Maschinen- oder Zellennetzwerk 8, 9 angeschlossen. Die Schnittstellen 4, 5 binden vorliegend unterlagerte Feldbus-Netzsegmente an das Firmennetzwerk 6 an. Sie stellen Downstream-Netzwerk-Schnittstellen dar.

Zur besseren Unterscheidung sind in der Figur die drei verschiedenen Netzwerk-Arten und zugehörigen Elemente mit verschiedenen Linien-Arten dargestellt, konkret das Firmennetzwerk 6 und zugehörige Elemente mit punktierten Linien, das Drahtlos-Netzwerk 7 und zugehörige Elemente mit gestrichelten Linien und die unterlagerten Maschinen- oder Zellennetzwerke 8 und zugehörigen Elemente mit strichpunktierten Linien.

Von Seiten der Anwender ist es erstrebenswert bzw. gewünscht, dass möglichst rasch eine durchgehende Konnektivität zwischen dem Firmen- und Produktionsnetz 6, den unterlagerten Zellen- bzw. Maschinennetzen 8, 9 und dem Drahtlos-Netzwerk 7 hergestellt wird, und zwar entsprechend des anwenderseitig vorgenommenen und/oder geänderten Hardware-Ausbaus an Schnittstellen 2, 3, 4, 5.

Um dies zu gewährleisten, ist das System 1 ausgebildet und eingerichtet, um sowohl bei Inbetriebnahme als auch im laufenden Betrieb zu überwachen, welche physikalischen und/oder virtuellen Hardware-Netzwerkschnittstellen 2, 3, 4, 5 vorhanden sind. Die Überwachung erfolgt vorliegend über ein auf dem System 1 installiertes Betriebssystem.

Das System 1 umfasst weiterhin ein Autokonfigurationsmodul 10.

Für den Fall, dass eine physikalische oder virtuelle Hardware-Netzwerkschnittstelle 2, 3, 4, 5 bei Inbetriebnahme des Systems 1 erstmals erfasst wird, oder eine physikalische oder virtuelle Hardware-Netzwerkschnittstelle 2, 3, 4, 5 im laufenden Betrieb des Systems 1 neu hinzukommt oder wegfällt, wird dies dem Autokonfigurationsmodul 10 kommuniziert und zwar zusammen mit einer Information über die Art der betroffenen Hardware-Netzwerkschnittstelle 2, 3, 4,5 und/oder die Art eines mit dieser verbundenen oder zu verbindenden Netzwerkes 6, 7, 8, 9. Die Kommunikation erfolgt vorliegend, indem das Betriebssystem dem Autokonfigurationsmodul 10 ein entsprechendes Ereignis als Plug-and-Play-Ereignis meldet. Die Meldung umfasst die Information, um welche Art von Ereignis es sich handelt, also ob eine Schnittstelle erstmals erfasst wurde oder neu hinzugekommen oder weggefallen ist. Weiterhin wird dem Autokonfigurationsmodul 10 ein Name der jeweils betroffenen Schnittstelle 2, 3, 4, 5 mitgeteilt. Die Schnittstellennamen sind derart gewählt, dass von diesen ableitbar ist, um welche Art von Schnittstelle 2, 3, 4, 5 es sich handelt, bzw. welche Rolle dieser zukommt. Bei Bedarf können neben dem Schnittstellennamen auch weitere Informationen hinzugefügt werden, beispielsweise der Busanschluss (insbesondere Hardware-Anschluss am PCI-Bus, USB-Bus und dergleichen), MAC-Adressen und dergleichen mehr.

In der Figur ist ein solches Hardware- bzw. Schnittstellen-Ereignis, also das erstmalige Erfassen oder neue Hinzukommen oder Wegfallen einer Schnittstelle 2, 3, 4,5, jeweils rein schematisch mit einem Blitz angedeutet, welcher mit der Bezugsziffer 11 versehen ist.

Jedes Mal, wenn eine Meldung über ein solches Hardware-Ereignis 11 bei dem Autokonfigurationsmodul 10 eingeht, wählt dieses in Reaktion darauf aus einer Mehrzahl von auf dem System gespeicherten Schablonen-Dateien 12, 13, 14 eine Schablonen-Datei 12, 13, 14 für den jeweiligen Kontext 15, 16, 17 aus.

Vorliegend sind drei Schablonen-Dateien 12, 13, 14 im System gespeichert. Eine für jede Schnittstellen-Art bzw. -Rolle, also eine Schablonen-Datei 12 für ein Hardware-Ereignis 11, welches eine Downstream-Schnittstelle 4, 5, betrifft, eine Schablonen-Datei 13 für ein Hardware-Ereignis 11, welches eine Drahtlos-Netzwerk-Schnittstelle 3 betrifft, und eine Schablonen-Datei 14 für ein Hardware-Ereignis 11, welches eine Upstream-Schnittstelle 2, betrifft. Es versteht sich, dass weitere Schablonen-Dateien für weitere Schnittstellen-Arten bzw. Schnittstellen-Rollen hinterlegt sein können. Bevorzugt ist für jede Art bzw. jede Rolle von Schnittstelle 2, 3, 4, 5, die an einem gegebenen System 1 auftreten kann, wenigstens eine, insbesondere genau eine Schablonen-Datei 12, 13, 14 auf dem System 1 hinterlegt, so dass jeder mögliche Hardware-Ausbau bzw. jede mögliche Änderung dieses abgedeckt ist.

Die Auswahl einer Schablonen-Datei 12 aus der Mehrzahl von Schablonen-Dateien 12, 13, 14 für den jeweiligen Kontext 15, 16, 17 durch das Autokonfigurationsmodul 10 erfolgt anhand von in den Schablonen-Dateien 12, 13, 14 hinterlegten Filterregeln. Vorliegend betreffen die Filterregeln Namen, die den Schnittstellen 2, 3, 4, 5 zugeordnet sind, und die dem Autokonfigurationsmodul 10 bei einem Hardware-Ereignis 11 kommuniziert werden bzw. wurden.

Im Folgenden wird der Ablauf beispielhaft für den Fall beschrieben, dass die Downstream-Schnittstelle 4 von einem Anwender neu hinzugefügt wird. Sind andere Schnittstellen 2, 3, 5 betroffen oder fallen diese weg oder werden bei Inbetriebnahme erstmalig erfasst, ist der Ablauf analog.

In Reaktion auf das neue Hinzufügen der Schnittstelle 4, insbesondere durch einen Anwender, wählt das Autokonfigurationsmodul die Schablonen-Datei 12 aus, also diejenige Schablonen-Datei 12, die für ein solches Hardware-Ereignis 11, konkret für Downstream-Schnittstellen vorgesehen ist.

Die Auswahl erfolgt dabei anhand des Namens der hinzugefügten Schnittstelle, der vorliegend "ens33p2" lautet, wobei betont sei, dass dies rein beispielhaft zu verstehen ist. Im vorliegenden Falle wird Downstream-Schnittstellen, welche der Anbindung von Feldbus-Netzwerksegmenten dienen, gezielt ein Name gegeben, der mit den drei Buchstaben "ens" beginnt.

Die ausgewählte Schablonen-Datei 12 sieht vorliegend wie folgt aus, wobei betont sei, dass dies eine rein beispielhafte Fassung ist, und Schablonen-Dateien auch eine andere Form aufweisen können:
match:
   device: "ens*"
networks:
   - {{device.name}}:
      script:
      add:
         - ip link add br{{device.name}} type bridge
         - ip link set br{{device.name}} up
         - ip link set {{device.name}} master br{{device.name}}
         - ip link {{device.name}} up
      remove:
         - ip link del br{{device.name}}
containers:
   v6router:
      image: ...
      networks:
         - uplink
         - {{device.name}}
   anat64:
      image: ...
      networks:
         - {{device.name}}
"match:" bzw. die ersten beiden Zeilen dieser Datei stellen dabei die den Schnittstellen-Namen betreffende Filterregel dar. Beginnt ein Name einer erstmals erfassten, neu hinzugefügten oder wegfallenden Schnittstelle 2, 3, 4, 5 mit "ens*", wird diese Schablonen-Datei 12 ausgewählt.

Das Autokonfigurationsmodul 10 erstellt unter Verwendung dieser Schablonen-Datei 12 eine Konfigurationsbeschreibung 18, die eine erste Teilkonfigurationsbeschreibung 19 und eine zweite Teilkonfigurationsbeschreibung 20 umfasst.

Die Erstellung der ersten und der zweiten Teilkonfigurationsbeschreibung 19, 20 aus der Schablonen-Datei 12 erfolgt dabei, indem das Autokonfigurationsmodul 10 den mehrfach in der Schablonen-Datei 12 auftauchenden Platzhalter {device.name} durch konkrete Werte, vorliegend den konkreten Schnittstellen-Namen, also ens33p2 ersetzt.

Die erste Teilkonfigurationsbeschreibung 19 (und die zugehörigen Zeilen 14 bis 23 der Schablonen-Datei 12) betrifft vorliegend zwei Kommunikations-Container 21, 22, die jeweils wenigstens eine Anwendung umfassen, mittels derer Netzwerk-Funktionen bereitgestellt werden können.

Die erste Teilkonfigurationsbeschreibung 19 sieht vorliegend konkret wie folgt aus, wobei diese wieder rein beispielhaft zu verstehen ist:
version: "3"
services:
   v6router:
      image: ...
      networks:
         - lupstream
         - 2downstream
   anat64:
      image: ...
      networks:
         - 2downstream
networks:
   1upstream:
      external: upstream
   2downstream:
      external: ens33p2

Wie man erkennt, werden vorliegend Netzwerkfunktionen eines IPv6-Routers und eines NAT64-Routers in containerisierter Form bereitgestellt.

Die erste Teilkonfigurationsbeschreibung 19 stellt die Konfigurationsbeschreibung für die in dem jeweiligen Kontext 15, 16, 17 gewünschten bzw. benötigten Kommunikations-Container 21, 22 dar. Sie betrifft also den vom Kontext 15, 16, 17 abhängigen, von der Art bzw. Rolle der betroffenen Schnittstelle 4 abhängigen Container-Ausbau. Sie dient insbesondere der weiteren Verarbeitung in einem Container-System bzw. Container-Werkzeug, wie etwa Docker Compose.

Die zweite Teilkonfigurationsbeschreibung 20 (und die zugehörigen Zeilen 3 bsi 13 der Schablonen-Datei 12) betrifft Netzwerk-Funktionen zur Verbindung der Kommunikations-Container 20, 21 mit der betroffenen Hardware-Netzwerkschnittstelle 4 in Form einer Konfigurationsbeschreibung für vorliegend eine virtuelle Bridge auf Betriebssystemebene bzw. - für den Fall, dass eine Schnittstelle 4 nicht wie vorliegen hinzugefügt sondern entfernt wird, Löschungsanweisungen ("remove: ...") für eine solche. Diese greifen für den Fall, dass dem Autokonfigurationsmodul 10 kommuniziert wurde, dass eine Downstream-Schnittstelle 4 zur Anbindung von Feldbus-Netzwerksegmenten weggefallen ist.

Die zweite Teilkonfigurationsbeschreibung 20 sieht vorliegend konkret wie folgt aus, was wiederum beispielhaft zu verstehen ist:
#!/bin/bash
ip link add brens33p2 type bridge
ip link set brens33p2 up
ip link set ens33p2 master brens33p2
ip link ens33p2 up

Die zweite Teilkonfigurationsbeschreibung 20 beschreibt - von der Konfigurationsbeschreibung 19 für den Container-Ausbau getrennt - erforderliche virtuellen Netzwerkfunktionen, die in dem jeweiligen Kontext 15, 16, 17 für das Verbinden der jeweiligen Kommunikations-Container 21, 22 mit der jeweiligen Schnittstelle 4 erforderlich sind. Vorliegend liegt die generierte Beschreibung als Shell-Script vor. Alternativ kann sie auch als "systemd units", als Clustersystem-Objekte (Kubernetes) oder dergleichen mehr ausgeführt sein.

Anhand dieser Beschreibung 20 sorgt das Autokonfigurationsmodul 10 insbesondere dafür, dass wenigstens ein das interne Netzwerk bildender Software-Switch anstatt mit dem Host-IP-Stack, wie es bei Docker üblich ist, allein mit der neu hinzugekommenen Schnittstelle 4 verknüpft wird.

Die erste Teilkonfigurationsbeschreibung 19 und die zweite Teilkonfigurationsbeschreibung 20 werden umgesetzt bzw. ausgeführt, um das System 1 gemäß dieser zu konfigurieren.

Für die Umsetzung bzw. Ausführung der ersten, die Container 21, 22 betreffende Teilkonfigurationsbeschreibung 19 weist das System 1 ein Container-Controller-Modul 23 auf für die Umsetzung der zweiten, die Betriebssystemebene betreffenden Teilkonfigurationsbeschreibung 20 weist das System 1 ein Netzwerk-Controller-Modul 24 auf.

Das Container-Controller-Modul 23 ist vorliegend Software-implementiert, konkret als Docker Composer Werkzeug ausgeführt bzw. umfasst ein solches, wobei dies beispielhaft zu verstehen ist. Wird alternativ oder zusätzlich zu Docker beispielsweise auf Kubernetes als Container-Technologie zurückgegriffen, kann das Container-Controller-Modul 23 auch als Kubernetes Pod Scheduler Controller ausgeführt sein bzw. einen solche umfassen. Andere oder weitere Container-Technologien sind natürlich ebenfalls möglich.

Infolge der Ausführung der ersten Teilkonfigurationsbeschreibung 19 durch das Container-Controller-Modul 23 werden die Kommunikations-Container 21, 22 mit den IPv6- und NAT64-Router-Funktionen erzeugt.

Das Autokonfigurationsmodul 10 teilt dem Container-Controller-Modul 23 weiterhin direkt oder indirekt mit, dass die Kommunikations-Container 21, 22 im vorliegenden Falle zu starten sind, da die Schnittstelle 4 hinzugefügt und nicht entfernt wurde. Wäre letzteres alternativ der Fall, würde das Autokonfigurationsmodul 12 dem Container-Controller-Modul 23 mitteilen, dass die Kommunikations-Container 21, 22 nicht zu starten sondern zu stoppen sind.

Das Netzwerk-Controller-Modul 24 für die Ausführung bzw. Umsetzung der zweiten Teilkonfigurationsbeschreibung 20 ist ebenfalls Software-implementiert, und vorliegend, da die zweite Teilkonfigurationsbeschreibung 20 in Form eines Shell-Scripts bereitgestellt wird, konkret als Shell-Script-Interpreter ausgeführt bzw. umfasst einen solchen. Es versteht sich, dass das Netzwerk-Controller-Modul 24, wenn die zweite Teilkonfigurationsbeschreibung 20 in anderer Form erzeugt wird, auch anders ausgeführt sein kann, beispielsweise als systemd oder Kubernetes Controller bzw. solche umfassen kann.

Es sei angemerkt, dass für den Fall, dass anstelle einer Downstream-Schnittstelle 4 eine andere Art von Schnittstelle 2, 3 bzw. eine Schnittstelle 2, 3, mit einer anderen Rolle hinzugefügt wird, der Ablauf völlig analog ist. Lediglich der konkrete Kommunikations-Container-Ausbau gemäß der ersten Teilkonfigurationsbeschreibung 19 und die virtuellen Netzfunktionen gemäß der zweiten Teilkonfigurationsbeschreibung 20 können bzw. werden dann abweichen. Für den Fall, dass beispielsweise eine Drahtlos-Netzwerkschnittstelle 3 hinzugefügt wird, würden nicht die Funktionen eines IPv6- und NAT64-Routers containersiert bereitgestellt, sondern zum Beispiel eine geeignete Software für einen WLAN Access-Point. Ein entsprechender Kommunikations-Container 25 für diesen Kontext 17 ist in der Figur ebenfalls rein schematisch dargestellt.

Durch die erfindungsgemäße Vorgehensweise kann die "Lücke" zwischen industriellen Anwendern und der Container-Technologie, wie beispielsweise Docker, geschlossen werden. So wird es möglich, die großen Vorteile dieser Technologie für Netzwerkfunktionen nutzbar zu machen, ohne dass es seitens der Anwender eines speziellen IT- bzw. Netzwerks- bzw. Container-Know-Hows bedarf. Unter Verwendung des Autokonfigurationsmoduls 10 und der Schablonen-Dateien 12, 13, 14 können Container mit Netzwerkfunktionen dynamisch und automatisch mit ihrer physikalischen Netz-Außenwelt verbunden werden, dies passend für den jeweiligen Kontext 15, 16, 17. Industrielle Anwender müssen kein IT-Fachwissen über Container, etwa Dock-Container, oder über zugehörige Werkzeuge, etwa Docker Network Driver, oder auch über Software-Switches haben, und können dennoch die Vorteile dieser Technologie für eine automatische Konfiguration im Falle einer Änderung bzw. Ergänzung des Hardware-Schnittstellenausbaus ihrer Systeme bzw. für deren Inbetriebnahme nutzen. Es wird besonders einfach für Anwender, Systeme 1 aus dem Bereich der Automatisierungstechnik um Netzwerkzu- oder Abgänge zu erweitern. Eine manuelle Konfiguration mittels zusätzlichem Engineering- bzw. Konfigurations-Werkzeug(en) ist nicht mehr nötig. Es genügt das Anstecken der entsprechenden Netzwerk-Schnittellen-Hardware, an welches sich dann eine vollständig automatische Konfiguration anschließt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum automatischen Konfigurieren eines Systems (1), insbesondere eines industriellen Automatisierungssystems, bei dem
- bei Inbetriebnahme des Systems (1) und/oder im laufenden Betrieb des Systems (1) überwacht wird, welche physikalischen und/oder virtuellen Hardware-Netzwerkschnittstellen (2, 3, 4, 5) das System (1) aufweist,
- für den Fall, dass eine physikalische oder virtuelle Hardware-Netzwerkschnittstelle (2, 3, 4, 5) bei Inbetriebnahme des Systems (1) erstmals erfasst wird, oder eine physikalische oder virtuelle Hardware-Netzwerkschnittstelle (2, 3, 4, 5) im Betrieb des Systems (1) neu hinzukommt oder wegfällt, dies einem Autokonfigurationsmodul (10) des Systems (1) zusammen mit einer Information über die Art der betroffenen Hardware-Netzwerkschnittstelle (2, 3, 4, 5) und/oder die Art eines mit dieser verbundenen oder zu verbindenden Netzwerkes (6, 7, 8, 9) kommuniziert wird,
- das Autokonfigurationsmodul (10) unter Verwendung einer bevorzugt auf dem System (1) gespeicherten, der Art der betroffenen Hardware-Netzwerkschnittstelle (2, 3, 4, 5) und/oder der Art eines mit dieser verbundenen oder zu verbindenden Netzwerkes (6, 7, 8, 9) zugeordneten Schablonen-Datei (12, 13, 14) eine Konfigurationsbeschreibung (18) erstellt, die eine erste Teilkonfigurationsbeschreibung (19) für wenigstens einen Kommunikations-Container (21, 22, 25), der wenigstens eine Anwendung umfasst, mittels derer Netzwerk-Funktionen bereitgestellt werden können, und eine zweite Teilkonfigurationsbeschreibung (20) für Netzwerk-Funktionen zur Verbindung des wenigstens einen Kommunikations-Containers (21, 22, 25) mit der betroffenen Hardware-Netzwerkschnittstelle (2, 3, 4, 5), insbesondere in Form einer Konfigurationsbeschreibung für wenigstens eine virtuelle Bridge und/oder wenigstens einen virtuellen Switch, umfasst, und
- die Konfigurationsbeschreibung ausgeführt wird, um das System (1) gemäß dieser zu konfigurieren.

2. Verfahren nach Anspruch 1,
**dadurch gekennzeichnet, dass** die Konfigurationsbeschreibung (18) erhalten wird, indem einer oder mehrere in der Schablonen-Datei (12) vorgesehene Platzhalter durch wenigstens einen zu der betroffenen Hardware-Netzwerkschnittstelle (2, 3, 4, 5) gehörigen Parameter, insbesondere einen Namen dieser, ersetzt werden.

3. Verfahren nach Anspruch 1 oder 2,
**dadurch gekennzeichnet, dass** die Schablonen-Datei (12) aus einer Mehrzahl von insbesondere auf dem System (1) gespeicherten unterschiedlichen Schablonen-Dateien (12, 13, 14) ausgewählt wird.

4. Verfahren nach Anspruch 3,
**dadurch gekennzeichnet, dass** die Auswahl insbesondere automatisiert anhand von in den Schablonen-Dateien (12, 13, 14) enthaltenen Filterregeln erfolgt, wobei bevorzugt die Filterregeln einen der betroffenen Schnittstelle (2, 3, 4, 5) zugeordneter Namen betreffen.

5. Verfahren nach Anspruch 3 oder 4,
**dadurch gekennzeichnet, dass** für jede Art von physikalischer und/oder virtueller Hardware-Netzwerkschnittstelle (2, 3, 4, 5), welche das System (1) aufweisen kann, jeweils wenigstens eine, bevorzugt jeweils genau eine Schablonen-Datei (12, 13, 14) insbesondere auf dem System (1) gespeichert ist, und/oder dass für zumindest drei verschiedene Arten von physikalischen und/oder virtuellen Hardware-Netzwerkschnittstellen (2, 3, 4, 5) jeweils wenigstens eine, bevorzugt jeweils genau eine Schablonen-Datei (12, 13, 14) insbesondere auf dem System (1) gespeichert ist, wobei es sich bei den drei verschiedenen Arten von physikalischen und/oder virtuellen Hardware-Netzwerkschnittstellen (2, 3, 4, 5) bevorzugt um Upstream-Schnittstellen (2), die insbesondere mit einem Upstream-, etwa Firmen-Netzwerk (6) eines Anwenders zu verbinden oder verbunden sind, um Downstream- Schnittstellen (4, 5), die mit einem unterlagerten Netzwerk (8, 9), insbesondere Zellen- oder Produktionsnetz, zu verbinden oder verbunden sind, und WLAN-Schnittstellen (3), die mit einem Drahtlos-Netzwerk (7) zu verbinden oder verbunden sind, handelt.

6. Verfahren nach einem der vorhergehenden Ansprüche, **dadurch gekennzeichnet, dass** dem Autokonfigurationsmodul (10) das erstmalige Erfassen einer physikalischen oder virtuellen Hardware-Netzwerkschnittstelle (2, 3, 4, 5) bei Inbetriebnahme des Systems (1) und/oder das neue Hinzukommen und/oder Wegfallen einer physikalischen oder virtuellen Hardware-Netzwerkschnittstelle (2, 3, 4, 5) im Betrieb des Systems (1) kommuniziert wird, indem ein auf dem System (1) laufendes Betriebssystem dem Autokonfigurationsmodul (10) ein entsprechendes Ereignis meldet, insbesondere als Plug-and-Play-Ereignis.

7. Verfahren nach einem der vorhergehenden Ansprüche, **dadurch gekennzeichnet, dass** im Rahmen der Umsetzung der ersten Teilkonfigurationsbeschreibung (19) der wenigstens eine Kommunikations-Container (21, 22, 25) erzeugt wird, insbesondere von einem Container-Controller-Modul (23) des Systems (1) .

8. Verfahren nach einem der vorhergehenden Ansprüche, **dadurch gekennzeichnet, dass** die zweite Teilkonfigurationsbeschreibung (20) von einem Netzwerk-Controller-Modul (24) des Systems (1) umgesetzt wird.

9. Verfahren nach einem der vorhergehenden Ansprüche, **dadurch gekennzeichnet, dass** wenigstens eine Anwendung des wenigstens einen Kommunikations-Containers (21, 22, 25) gemäß der ersten Teilkonfigurationsbeschreibung (19) Funktionen eines insbesondere automatisch konfigurierenden IPv6- und/oder NAT64-Routers und/oder eines Namensdienst-, insbesondere DNS-Clients oder Servers und/oder eines Brouters bereitstellt und/oder durch eine Software für einen WLAN-Access-Point gegeben ist oder eine solche umfasst.

10. Verfahren nach einem der vorhergehenden Ansprüche, **dadurch gekennzeichnet, dass** für den Fall, dass eine physikalische oder virtuelle Hardware-Netzwerkschnittstelle (2, 3, 4, 5) im Betrieb des Systems wegfällt,
das Autokonfigurationsmodul (10) das Entfernen und/oder Deaktivieren von Netzwerk-Funktionen für die betroffene Schnittstelle (2, 3, 4, 5) und/oder das Stoppen von Kommunikations-Containern für die betroffene Schnittstelle (2, 3, 4, 5) veranlasst.

11. System (1) zur Durchführung des Verfahrens nach einem der vorhergehenden Ansprüche, wobei das System (1) derart ausgebildet und/oder eingerichtet ist,
- dass einem Autokonfigurationsmodul (10) des Systems (1) gemeldet wird, wenn eine physikalische oder virtuelle Hardware-Netzwerkschnittstelle (2, 3, 4, 5) bei Inbetriebnahme des Systems erstmals erfasst wird, und/oder eine physikalische oder virtuelle Hardware-Netzwerkschnittstelle (2, 3, 4, 5) im Betrieb des Systems (1) neu hinzukommt oder wegfällt, wobei zusammen mit einer solchen Meldung eine Information über die Art der betroffenen Hardware-Netzwerkschnittstelle (2, 3, 4, 5) und/oder die Art eines mit dieser verbundenen oder zu verbindenden Netzwerkes (6, 7, 8, 9) kommuniziert wird,
- dass das Autokonfigurationsmodul (10) jedes Mal, wenn eine solche Meldung eingeht, unter Verwendung einer bevorzugt auf dem System (1) gespeicherten, der Art der jeweils betroffenen Hardware-Netzwerkschnittstelle (2, 3, 4, 5) und/oder der Art eines mit dieser verbundenen oder zu verbindenden Netzwerkes (6, 7, 8, 9) zugeordneten Schablonen-Datei (12, 13, 14) eine Konfigurationsbeschreibung (18) erstellt, die eine erste Teilkonfigurationsbeschreibung (10) für wenigstens einen Kommunikations-Container (21, 22, 25), der wenigstens eine Anwendung umfasst, mittels derer Netzwerk-Funktionen für die jeweils betroffene Schnittstelle (2, 3, 4, 5) bereitgestellt werden können, und eine zweite Teilkonfigurationsbeschreibung (20) für Netzwerk-Funktionen zur Verbindung des wenigstens einen Kommunikations-Containers (21, 22, 25) mit der jeweils betroffenen Schnittstelle (2, 3, 4, 5), insbesondere in Form einer Konfigurationsbeschreibung für wenigstens eine virtuelle Bridge und/oder wenigstens einen virtuellen Switch, umfasst, und
- dass die Konfigurationsbeschreibung (18) ausgeführt wird, um das System (1) gemäß dieser zu konfigurieren.

12. System nach Anspruch 11,
**dadurch gekennzeichnet, dass** das Autokonfigurationsmodul (10) ausgebildet und/oder eingerichtet ist, um einen oder mehrere in der Schablonen-Datei (12, 13, 14) vorgesehene Platzhalter durch wenigstens einen zu der jeweils betroffenen Hardware-Netzwerkschnittstelle (2, 3, 4, 5) gehörigen Parameter, insbesondere einen Namen dieser, zu ersetzen und so die Konfigurationsbeschreibung (18) zu erhalten.

13. System nach Anspruch 11 oder 12,
**dadurch gekennzeichnet, dass** das Autokonfigurationsmodul (10) ausgebildet und/oder eingerichtet ist, um die Schablonen-Datei (12, 13, 14) aus einer Mehrzahl von insbesondere auf dem System gespeicherten unterschiedlichen Schablonen-Dateien (12, 13, 14) auszuwählen.

14. System nach Anspruch 13,
**dadurch gekennzeichnet, dass** das Autokonfigurationsmodul (10) ausgebildet und/oder eingerichtet ist, um die Auswahl insbesondere automatisiert anhand von in den Schablonen-Dateien (12, 13, 14) enthaltenen Filterregeln zu treffen, wobei bevorzugt die Filterregeln einen der jeweils betroffenen Schnittstelle (2, 3, 4, 5) zugeordneter Namen betreffen.

15. System nach Anspruch 13 oder 14,
**dadurch gekennzeichnet, dass** für jede Art von physikalischer und/oder virtueller Hardware-Netzwerkschnittstelle (2, 3, 4, 5), welche das System (1) aufweisen kann, jeweils wenigstens eine, bevorzugt jeweils genau eine Schablonen-Datei (12, 13, 14) auf dem System (1) gespeichert ist, und/oder dass für zumindest drei verschiedene Arten von physikalischen und/oder virtuellen Hardware-Netzwerkschnittstellen (2, 3, 4, 5) jeweils wenigstens eine, bevorzugt jeweils genau eine Schablonen-Datei (12, 13, 14) auf dem System (1) gespeichert ist, wobei es sich bei den drei verschiedenen Arten von physikalischen und/oder virtuellen Hardware-Netzwerkschnittstellen (2, 3, 4, 5) bevorzugt um Upstream-Schnittstellen (2), die insbesondere mit einem Upstream-, etwa Produktions- oder Firmen-Netzwerk (6) eines Anwenders zu verbinden oder verbunden sind, um Downstream-Schnittstellen (4, 5), die mit einem unterlagerten Netzwerk (8, 9), insbesondere Zellen- oder Produktionsnetz, zu verbinden oder verbunden sind, und WLAN-Schnittstellen (3), die mit einem Drahtlos-Netzwerk (7) zu verbinden oder verbunden sind, handelt.

16. System nach einem der Ansprüche 11 bis 15,
**dadurch gekennzeichnet, dass** das System (1) ausgebildet und/oder eingerichtet ist, um dem Autokonfigurationsmodul (10) das erstmalige Erfassen einer physikalischen oder virtuellen Hardware-Netzwerkschnittstelle (2, 3, 4, 5) bei Inbetriebnahme des Systems (1) und/oder das neue Hinzukommen und/oder Wegfallen einer physikalischen oder virtuellen Hardware-Netzwerkschnittstelle (2, 3, 4, 5) im Betrieb des Systems (1) zu kommunizieren, indem ein auf dem System laufendes Betriebssystem dem Autokonfigurationsmodul (10) ein entsprechendes Ereignis meldet, insbesondere als Plug-and-Play-Ereignis.

17. System nach einem der Ansprüche 11 bis 16,
**dadurch gekennzeichnet, dass** das System (1), insbesondere ein Container-Controller-Modul (23) des Systems (1), ausgebildet und/oder eingerichtet ist, um im Rahmen der Umsetzung der ersten Teilkonfigurationsbeschreibung (19) den wenigstens einen Kommunikations-Container (21, 22, 25) zu erzeugen.

18. System (1) nach einem der Ansprüche 11 bis 17,
**dadurch gekennzeichnet, dass** das System (1) ein Netzwerk-Controller-Modul (24) umfasst, welches ausgebildet und/oder eingerichtet ist, um die zweite Teilkonfigurationsbeschreibung (20) umzusetzen.

19. System (1) nach einem der Ansprüche 11 bis 18,
**dadurch gekennzeichnet, dass** das System (1) derart ausgebildet und/oder eingerichtet ist, dass wenigstens eine Anwendung des wenigstens einen Kommunikations-Containers (21, 22, 25) gemäß der ersten Teilkonfigurationsbeschreibung (19) Funktionen eines insbesondere automatisch konfigurierenden IPv6- und/oder NAT64-Routers und/oder eines Namensdienst-, insbesondere DNS-Clients oder Servers und/oder eines Brouters bereitstellt und/oder durch eine Software für einen WLAN-Access-Point gegeben ist oder eine solche umfasst.

20. System (1) nach einem der Ansprüche 11 bis 19,
**dadurch gekennzeichnet, dass** das System (1) derart ausgebildet und/oder eingerichtet ist, dass für den Fall, dass dem Autokonfigurationsmodul (10) gemeldet wird, dass eine physikalische oder virtuelle Hardware-Netzwerkschnittstelle (2, 3, 4, 5) im Betrieb des Systems (1) wegfällt, das Autokonfigurationsmodul (10) das Entfernen und/oder Deaktivieren von Netzwerk-Funktionen und/oder virtuellen Netzwerken für die betroffene Schnittstelle (2, 3, 4, 5) veranlasst.

21. Computerprogramm umfassend Programmcode-Mittel zur Durchführung des Verfahrens nach einem der Ansprüche 1 bis 10.

22. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 10 durchzuführen.
